# EUROPÄISCHE PATENTSCHRIFT

(11) **EP 0 944 784 B1**
(45) Veröffentlichungstag und Bekanntmachung des Hinweises auf die Patenterteilung: **27.03.2002**
(21) Anmeldenummer: 97953782.6
(22) Anmeldetag: 11.12.1997
(51) Int. Cl.: F16F 15/26, F02F 7/00, F02B 75/06

(54) **STÜTZSTRUKTUR FÜR DAS KURBELGEHÄUSE EINER HUBKOLBEN-BRENNKRAFTMASCHINE**
SUPPORTING STRUCTURE FOR THE CRANKCASE OF A RECIPROCATING PISTON INTERNAL COMBUSTION ENGINE
STRUCTURE SUPPORT POUR LE CARTER D'UN MOTEUR A COMBUSTION INTERNE A PISTON ALTERNATIF

(30) Priorität: 21.12.1996 DE 19653873
(43) Veröffentlichungstag der Anmeldung: 29.09.1999
(73) Patentinhaber: Volkswagen Aktiengesellschaft, 38436 Wolfsburg (DE)
(72) Erfinder: HILBIG, Jens, D-38551 Ribbesbüttel (DE); TREMPER, Karsten, D-38102 Braunschweig (DE); KÄMPFNER, Michael, D-38154 Königslutter (DE); CORNELIUS, Volker, D-38104 Braunschweig (DE)
(86) Internationale Anmeldenummer: EP9706923
(87) Internationale Veröffentlichungsnummer: WO9828555

(56) Entgegenhaltungen:
- EP-A- 0 789 164
- FR-A- 997 076
- FR-A- 2 720 464
- US-A- 2 914 137
- US-A- 5 535 643

## Beschreibung

Die Erfindung betrifft eine Stützstruktur für das Kurbelgehäuse einer Hubkolben - Brennkraftmaschine gemäß dem Oberbegriff des Patentanspruches 1. Eine derartige stützstruktur ist aus der FR-A-997 076 bekannt.

Aus DE 42 04 522 C1 ist es bekannt, eine Ölwanne an einer die Kurbelwelten Längsachse aufnehmenden Flanschebene zu befestigen. In dieser Flanschfläche ist im Öffnungsbereich des Kurbelgehäuses gegenüber der Ölwanne ein schalenartiges, sich in Quer- und Längsrichtung des Kurbelgehäuses erstreckendes Bauteil zur Geräuschdämpfung angeordnet. Zwischen diesem Bauteil und der Ölwanne rotiert eine Ausgleichswelle, welche zumindest teilumfänglich von einem bogenförmigen Ansatz des Bauteiles umfaßt ist. Die speziell ausgebildete Ausgleichswelle bildet gemeinsam mit dem schalenförmigen Ansatz eine in Längsrichtung des Kurbelgehäuses verlaufende Dämpfungskammer, welche über eine Öffnung im Bauteil mit dem darüberliegenden Kurbeltrieb kommuniziert. Zweck dieser Anordnung ist es, die durch die Auf- und Abwärtsbewegung der Hubkolben verursachten Gasstöße über die Öffnung in alle Richtungen etwa achsparallel zur Kurbelwelle zu verteilen und somit eine unmittelbare Beaufschlagung der Ölwanne mit den pulsierenden Gassäulen zu vermeiden.

Aus der DE-Z MTZ Motortechnische Zeitschrift 56, 1995, Nr. 9 Seite 531 ist eine Hubkolben-Brennkraftmaschine bekannt, deren seitliche Kurbelgehäusewandungen über die Kurbelwellenlagermitte hinaus in Richtung auf eine Ölwanne gezogen sind. In zum zuvorgenannten Stand der Technik vergleichbarer Art und Weise ist innerhalb dieser Anschlußebene zwischen Ölwanne und Kurbelgehäuse ein allerdings im wesentlichen in einer planen Ebene liegendes, vergleichsweise filigranes Rahmenteil ausgebildet, welches jeweils in Querebenen zwischen den einzelnen Zylindern Stege mit Durchgangsöffnungen für jeweils drei Schraubverbindungen aufweist. Die beiden äußeren Schraubverbindungen sind im Bereich der seitlichen Kurbelgehäusewandungen an diese angebunden, während die mittlere Schraubverbindung in die jeweils darüberliegende Kurbelwellenlager-Halbschale eingreift.

Eine Weiterbildung dieses Standes der Technik ist in der DE-Z MTZ Motortechnische Zeitschrift 57, 1996, Nr. 9, Seite 496 offenbart, wobei hier im wesentlichen im Bereich unterhalb eines der Zylinder ein Massenausgleichsgetriebe mit zwei gegenläufig zueinander rotierenden Wellen integriert ist. Der Antrieb erfolgt über ein auf einer Kurbelwange eines mittleren Zylinders angeordnetes Zahnrad auf eine der beiden Ausgleichswellen, welche ihrerseits die andere Ausgleichswelle gegensinnig antreibt.
Prinzipiell ist diese zuvor beschriebene Art eines zweiwelligen Ausgleichsgetriebes z. B. aus der DE-OS 22 53 605 bekannt. Hierbei ist jedoch unter Verzicht auf einen separaten Lagerrahmen durch Verlängerung von zwei Lagerstühlen in Richtung auf die Ölwanne und durch Aufschrauben von separaten Lagerdeckeln eine Lagerung der beiden Wellen ermöglicht. Die Anbindung an Hauptlagerstühle ermöglicht hierbei ein Anzapfen der Schmierölversorgung der Kurbelwelle, wobei durch Einbringen einer vergleichsweise großen Anzahl von Längs- und Querbohrungen sämtliche Lagerstellen der Nebenwellen versorgt sind.

Der Erfindung liegt die Aufgabe zugrunde, eine bauraumopitmale Stützstruktur für den einer Ölwanne zugewandten Öffnungsbereich eines Kurbelgehäuses unter baulicher Berücksichtigung einer Ausgleichswelie zu schaffen.

Die Lösung dieser Aufgabe gelingt mit den Merkmalen des Patentanspruches 1. Vorteilhafter Ausgestaltungen der Erfindung sind in den abhängigen Ansprüchen angegeben.

Erfindungsgemäß ist vorgesehen, daß im Öffnungsbereich des Kurbelgehäuses gegenüber einer an einem Flansch gehaltenen Ölwanne ein sich in Quer- und Längsrichtung dieses Kurbelgehäuses erstreckendes Bauteil angeordnet ist, welches zur Erzielung einer optimalen Aussteifung im wesentlichen plattenartig ausgebildet ist und diesen Öffnungsbereich gegenüber der Ölwanne im wesentlichen abtrennt. Zur Vermeidung unerwünschter Körperschallübertragungswege zwischen Kurbeltrieb und Seitenwandungen des Kurbelgehäuses ist dieses Bauteils mittels lösbarer Verbindungen ausschließlich an dem den Öffnungsbereich umgebenden Flansch angebunden und gleichzeitig ist unter optimater Ausnutzung des Bauraumes und mit einem hohen Maße an Funktionsintegration eine Ausgleichswelle in integral mit diesem Bauteil ausgebildeten Lagern abgestützt.
Die plattenartige Ausbildung des Bauteiles hat darüberhinaus den Vorteil, daß das Bauteil als Ölhobel wirken kann, der vom Kurbeltrieb abgeschleudertes, mit Luft vermischtes Schmieröl gezielt aufnimmt und über definierte, fensterartige Öffnungen in die Ölwanne leitet.

In bevorzugter Ausgestaltung der Erfindung kann vorgesehen sein, daß die Lager in integral und materialeinheitlich mit dem Bauteil ausgebildeten und abragenden Lagerböcken ungeteilt ausgebildet sind.
Hierbei kann weiterhin zur optimalen Raumausnutzung in vorteilhafter Ausgestaltung vorgesehen sein, daß einer dieser Lagerböcke stirnseitig in einer Wandung integral ausgebildet ist, wobei weiterhin bevorzugt an dieser Stelle der Antrieb der Ausgleichswelle erfolgen kann.
Die ungeteilten Lager vermeiden Bauteil- und Montageaufwand und ermöglichen ein Einstecken der Ausgleichswelle von der Stirnseite aus, welche der den Lagerbock aufweisenden Stirnseite gegenüberliegt.

Weiterhin bevorzugt kann die dem Kurbeltrieb zugewandte Fläche des Bauteils zumindest abschnittsweise eng benachbart zur Pleuelgeigenkontur des Kurbeltriebes liegend ausgebildet sein, so daß separate Ölschwallbleche, wie in Verbindung mit Leiterrahmen aus dem Stand der Technik bekannt, vermieden sind.

Für eine weiter verbesserte Raumausnutzung kann vorgesehen sein, daß benachbart zur stimseitigen Wandung und neben der Ausgleichswelle liegend ein Nebenaggregat der Brennkraftmaschine, bevorzugt eine Ölpumpe, am Bauteil angeordnet ist. Bevorzugt läuft deren Antriebsrad dabei in einer vor der stirnseitigen Wandung liegenden Triebebene, in welcher ein Antriebsrad der Nebenwelle, ein weiteres Umlenkrad sowie ein Abtriebsrad der Kurbelwelle liegt.

Weitere Vorteile und Merkmale der Erfindung ergeben sich aus dem nachfolgenden anhand einer Zeichnung näher erläuterten Ausführungsbeispiel.

Es zeigen:
- Fig. 1: eine perspektivische Ansicht von schräg unten auf ein nicht bestücktes Bauteil,
- Fig. 2: eine perspektivische Ansicht eines in einer Hubkolben-Brennkraftmaschine verbauten Bauteiles mit einem teilweise dargestellten Kurbeltrieb ohne Kurbelgehäuse,
- Fig. 3: eine stimseitige Seitenansicht zu Figur 2,
- Fig. 4: eine Seitenansicht zu Figur. 3,
- Fig. 5: eine Ansicht in Pfeilrichtung X gemäß Figur 1,

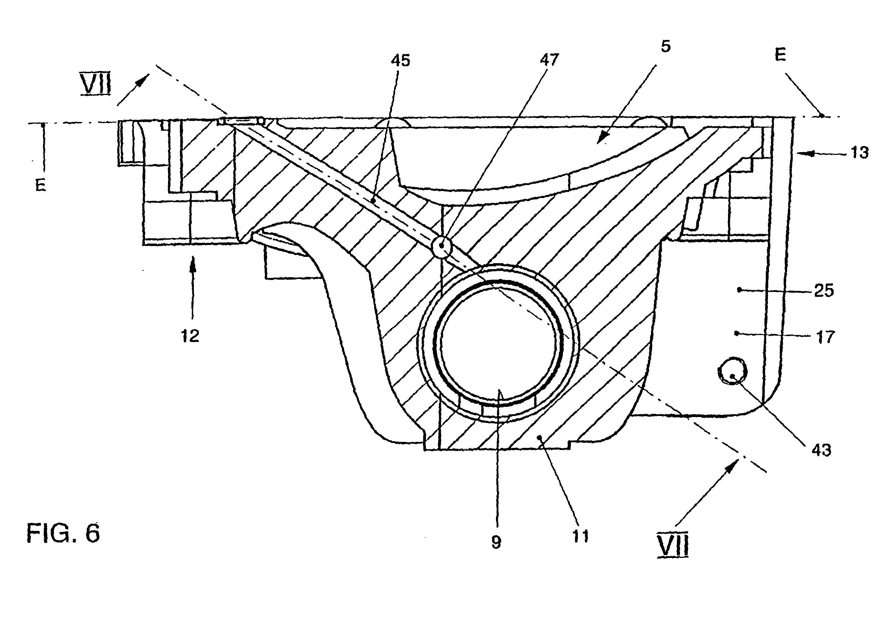

- Fig. 6: einen Schnitt entlang der Linie VI - VI gemäß Figur 5 und

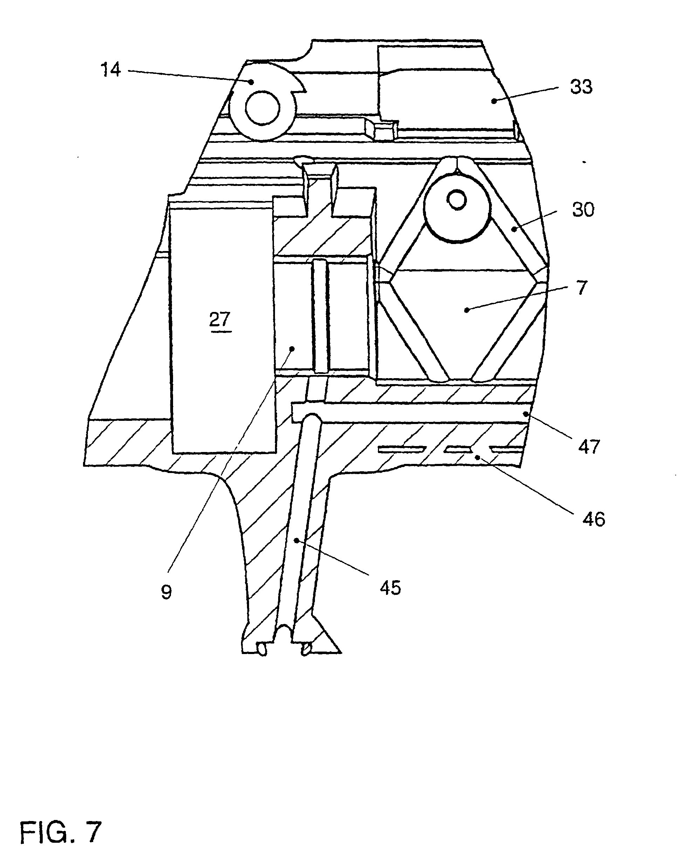

- Fig. 7: einen Schnitt entlang der Linie VII - VII gemäß Figur 6.

Eine Hubkolben-Brennkraftmaschine weist ein nicht gezeigtes Kurbelgehäuse mit einer darin rotierend gelagerten Kurbelwelle 1 auf. Seitliche Wandungen des Kurbelgehäuses sind über die Kurbelwellenmitte 2 hinaus in Richtung auf eine nicht gezeigte Ölwanne bis in eine Flanschebene E geführt. An diese Flanschebene E schließt sich in Richtung auf die Ölwanne ein an die Wandungen des Kurbelgehäuses angebundenes, insgesamt mit 3 bezeichnetes Bauteil an. Dieses ist im wesentlichen plattenartig ausgebildet und erstreckt sich in Längsrichtung L und Querrichtung Q des Kurbelgehäuses und trennt durch seine Anbindung an den den Öffnungsbereich des Kurbelgehäuses umgebenden Flansch den insgesamt mit 4 bezeichneten Kurbeltrieb gegenüber der Ölwanne im wesentlichen ab.

Die dem Kurbeltrieb 4 zugewandte Fläche 5 des Bauteiles 3 ist zumindest im Bereich von Kurbelwangen 6 des Kurbeltriebes 4 entsprechend der dort durch die Rotation entstehenden Pleuelgeigenkontur ausgebildet.

Auf seiner vom Kurbeitrieb 4 abgewandten und der Ölwanne zugewandten Fläche 7 trägt das Bauteil 3 einstückig und materialeinheitlich ausgebildete, jeweils ein ungeteiltes Lager 8, 9 aufweisende Lagerböcke 10, 11.

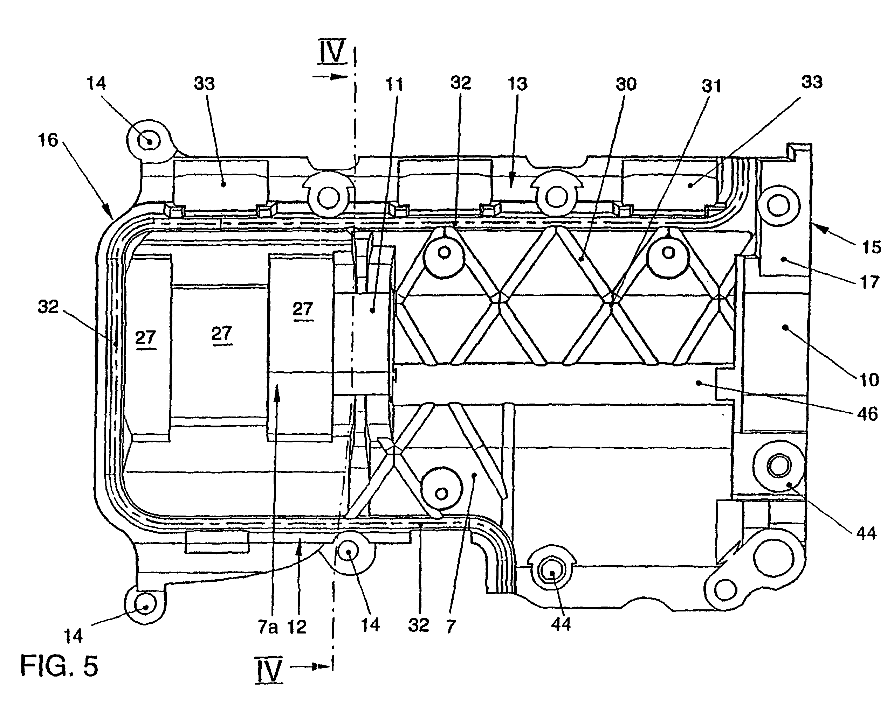

Wie insbesondere Figur 5 entnehmbar, ist das Bauteil 3 im wesentlichen rechteckförmig ausgebildet, wobei an den beiden Längsseiten 12, 13 Befestigungsaugen 14 zur Durchführung von Schraubverbindungen angeordnet sind. Mit diesen ist das Bauteil 3 in der Flanschebene E am Kurbelgehäuse festgelegt.

In Längsrichtung L erstrecken sich zwischen den Längsseiten 12 und 13 endseitig jeweils Stirnseiten 15 und 16.
Die eine Stirnseite 15 ist als Stirnwandung 17 ausgebildet und nimmt unter anderem integral den Lagerbock 10 auf.

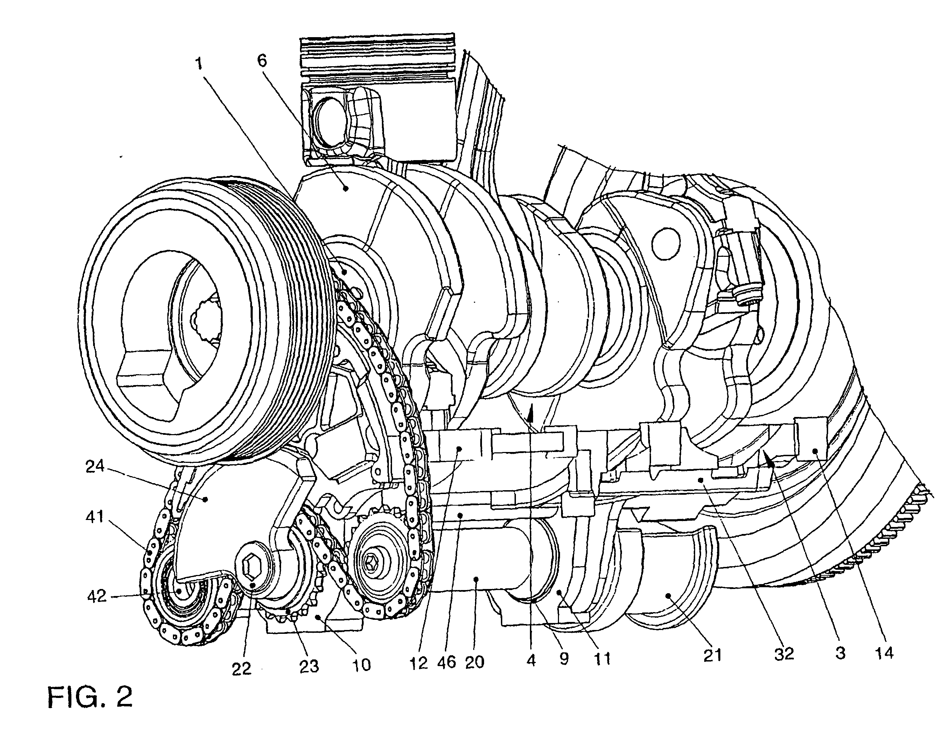

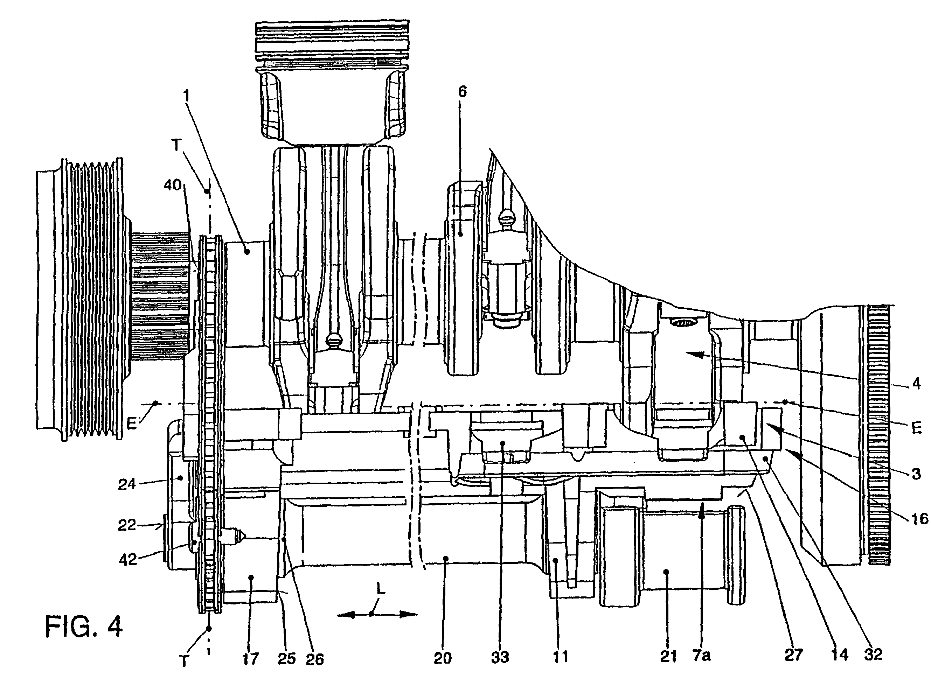

im bestückten Zustand des Bauteiles 3 gemäß Figuren 2, 3 und 4 ist in den Lagern 8 und 9 eine insgesamt mit 20 bezeichnete Ausgleichswelle drehbar gehalten. Diese ist integral und einstückig mit einer Ausgleichsmasse 21 versehen und von der Stirnseite 16 aus zunächst durch das Lager 9 und anschließend durch das Lager 8 eingesteckt. Auf einen im eingesteckten Zustand das Lager 8 durchsetzenden, abgesetzten Zapfen 22 der Ausgleichswelle 20 ist ein als Kettenrad ausgebildetes Antriebsrad 23 und anschließend eine weitere Ausgleichsmasse 24 aufgesetzt. Diese Anordnung gewährleistet gemeinsam mit einem an der Innenseite 25 der Stimwandung 17 anliegenden Bund 26 der Ausgleichswelle 20 eine Axiallagerung, während das Lager 9 als Loslager ausgebildet ist.

Die fliegende Lagerung der Ausgleichsmasse 21 gewährleistet ein bauraumoptimales Heranrücken dieser Ausgleichsmasse 21 an die Fläche 7. Diese weist in diesem Abschnitt 7a entsprechend geformte Konturflächen 27 zur Schaffung eines Freiganges auf.

Zwischen den beiden Lagerböcken 10 und 11 weist die Fläche 7 sich kreuzende Versteifungsrippen 30 auf, welche sich in Kreuzungspunkten 31 schneiden.

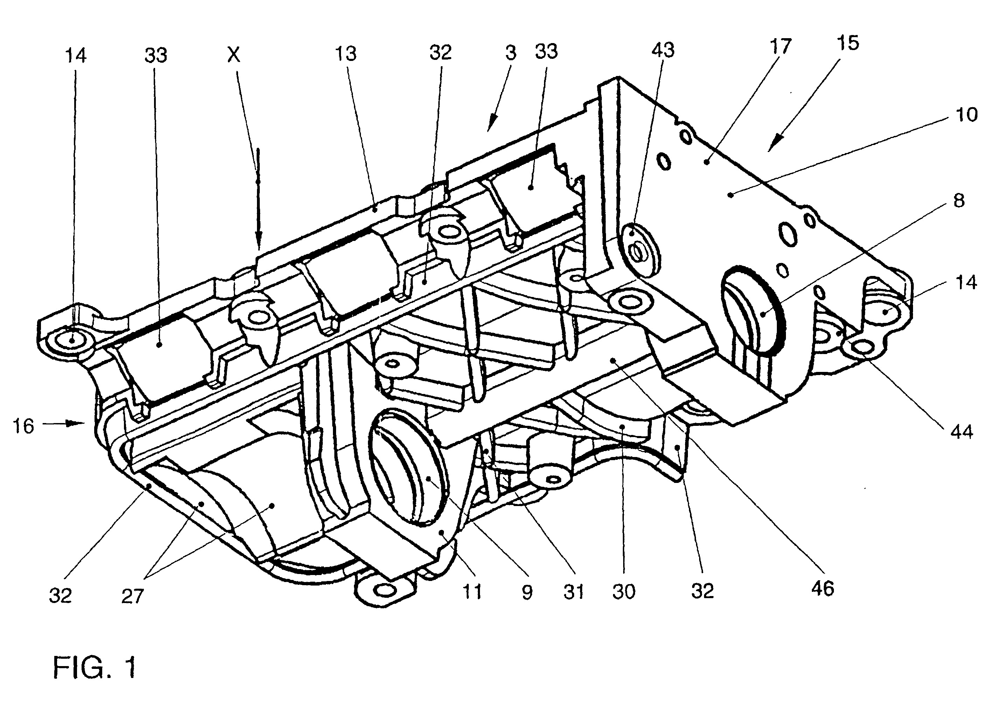

Wie am besten aus Figur 1 und Figur 5 ersichtlich, trägt die Fläche 7 weiterhin einen Steg 32, an welchen eine nicht gezeigte Kapselung der Antriebswelle 20 angrenzt. Dieser Steg 32 erstreckt sich von der Stimwandung 17 ausgehend beabstandet und parallel zur Längsseite 13, entlang der Stirnseite 16 und wiederum nach innen versetzt im wesentlichen parallel zur anderen Längsseite 12. Im Bereich dieser Längsseiten 12 und 13 sind zwischen diesen und dem Steg 32 fensterartige Öffnungen 33 für den Durchtritt von Schmieröl des Kurbeltriebes 4 in die Ölwanne angeordnet.

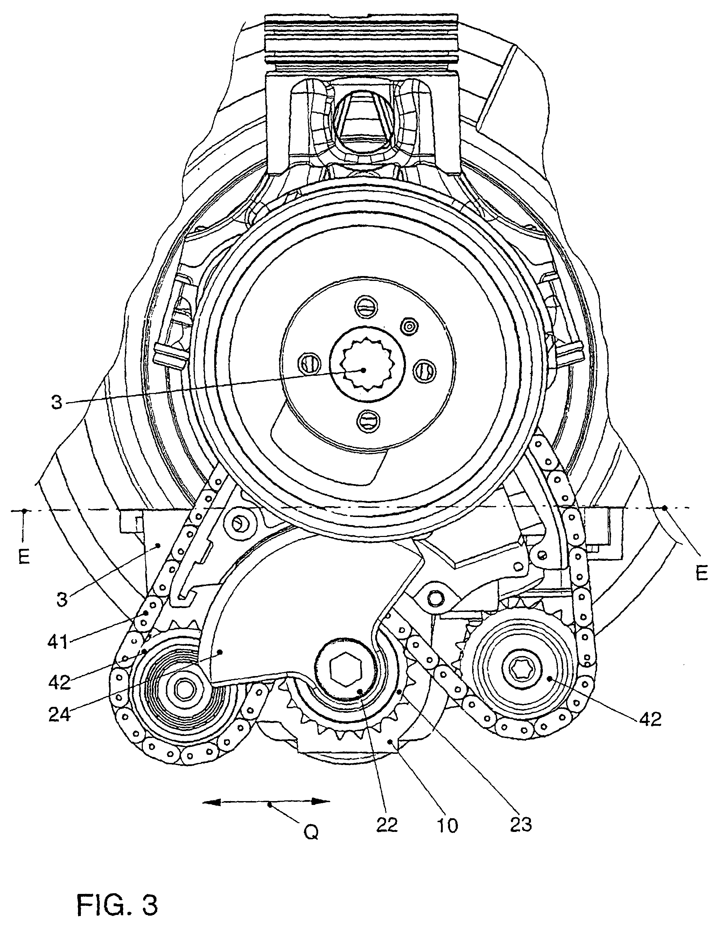

Der Antrieb der Ausgleichswelle 20 erfolgt von einem Abtriebsrad 40 der Kurbelwelle 1 aus. Dieses Abtriebsrad 40 definiert gemeinsam mit dem Antriebsrad 23 eine Triebebene T für eine Kette 41. Wie am besten aus Figuren 2 und 3 ersichtlich, treibt die Kette 41 mit ihrer Rückseite zur Drehrichtungsumkehr die Ausgleichswelle 20 an. Zu diesem Zwecke sind zwei Umlenkräder 42 vorgesehen, wobei eines dieser Umlenkräder 42 in einer Lagerung 43 der Stirnwandung 17 drehbar gehalten ist.
Ein weiteres Umlenkrad 42 wirkt als Antriebsrad für eine nichtgezeigte Ölpumpe der Hubkolben-Brennkraftmaschine. Diese ist zur optimalen Bauraumausnutzung zwischen der Innenseite 25 der Stirnwandung 17, der Fläche 7 und neben der Ausgleichswelle 20 liegend lösbar am Bauteil 3 angeordnet. Die Fläche 7 trägt zu diesem Zwecke Befestigungspunkte 44.

Zur Versorgung der Lager 8 und 9 mit Schmieröl und zur Vermeidung von externen Zuleitungen weist das Bauteil 3 ein Kanalsystem für Schmieröl auf. Von der Flanschebene E ausgehend erstreckt sich im Bereich des Lagerbockes 11 ein im wesentlichen querverlaufender Zuströmkanal 45, welcher sich bis zum dortigen Lager 9 erstreckt. In einem von der Fläche 7 abragend ausgebildeten Schacht 46 erstreckt sich parallel zur Ausgleichswelle 20 ein den Zuströmkanal 45 schneidender Versorgungskanal 47, der das eingespeiste Schmieröl zum Lager 8 fördert.
Der den Versorgungskanal 47 aufnehmende Schacht 46 verläuft entlang einer Reihe Kreuzungspunkte 31.

## Patentansprüche

1. Stützstruktur einer Hubkolben-Brennkraftmaschine, wobei die Stützstruktur ein im Öffnungsbereich eines Kurbelgehäuses gegenüber einer daran gehaltenen Ölwanne, sich in Querrichtung (Q) und Längsrichtung (L) des Kurbelgehäuses erstreckendes Bauteil (3) umfaßt, zwischen diesem Bauteil (3) und der Ölwanne eine Ausgleichswelle (20) rotiert, welche zumindest teilumfänglich von einem bogenförmigen Ansatz des Bauteils (3) umfaßt wird, das Bauteil (3) plattenartig ausgebildet den Öffnungsbereich des Kurbelgehäuses im wesentlichen gegenüber der Ölwanne abtrennt, das Bauteil (3) mittels lösbarer Verbindungen am Kurbelgehäuse befestigt ist und die Ausgleichswelle (20) in integral mit dem Bauteil (3) ausgebildeten Lagern (8, 9) abgestützt ist, **dadurch gekennzeichnet, daß** das Bauteil (3) ausschließlich an einem den Öffnungsbereich umgebenden Flansch des Kurbelgehäuses gehalten ist, daß der Flansch eine Flanschebene (E) definiert, welche in Richtung auf die Ölwanne beabstandet zur Kurbelwellenmitte (2) liegt, daß das Bauteil (3) auf seiner der Ölwanne zugewandten Fläche (7) abragende, die Lager (8, 9) aufnehmende Lagerböcke (10, 11) aufweist und daß das Bauteil (3) ein Kanalsystem für Schmieröl aufweist, welches zumindest einen vom Flansch aus gespeisten Zuströmkanal (45) im Bereich eines Lagerbockes (11) aufweist, welcher das dortige Lager (9) versorgt.

2. Stützstruktur nach Anspruch 1, **dadurch gekennzeichnet, daß** die dem Kurbeltrieb (4) zugewandte Fläche (5) des Bauteils (3) zumindest abschnittsweise der Pleuelgeigenkontur des Kurbeltriebes (4) folgend ausgebildet ist.

3. Stützstruktur nach einem der vorhergehenden Ansprüche, **dadurch gekennzeichnet, daß** das Bauteil (3) im wesentlichen rechteckförmig dem Öffnungsbereich des Kurbelgehäuses folgend ausgebildet ist und zumindest einer (10) der Lagerböcke (10, 11) an einer (15) der beiden Stirnseiten (15, 16) dieses Bauteils (3) liegend angeordnet ist.

4. Stützstruktur nach Anspruch 1 oder 3, **dadurch gekennzeichnet, daß** die Lager (8, 9) ungeteilt und materialeinheitlich mit dem Bauteil (3) ausgebildet sind.

5. Stützstruktur nach Anspruch 3, **dadurch gekennzeichnet, daß** ein weiteres Lager (9) zwischen den beiden Stirnseiten (15, 16) angeordnet ist und eine Ausgleichsmasse (21) der Ausgleichswelle (20) zwischen diesem Lager (9) und der einen Lagerbock (10) aufnehmenden Stirnseile (15) gegenüberliegenden Stirnseite (16) liegend angeordnet ist.

6. Stützstruktur nach Anspruch 3, **dadurch gekennzeichnet, daß** eine Ausgleichsmasse (24) der Ausgleichswelle (20) vor der das eine Lager (8) aufnehmenden Stirnseite (15) liegend angeordnet ist.

7. Stützstruktur nach Anspruch 6, **dadurch gekennzeichnet, daß** der eine Lagerbock (10) integral in einer an der Stirnseite (15) liegenden Stirnwandung (17) ausgebildet ist, welche weiterhin eine Lagerung (43) für ein Umlenkrad (42) eines die Ausgleichswelle (20) antreibenden Endlostriebes aufnimmt.

8. Stützstruktur nach Anspruch 7, **dadurch gekennzeichnet, daß** das Umlenkrad (42) in einer Triebebene (T) läuft, welche zwischen der Ausgleichsmasse (24) und der Stimwandung (17) liegt.

9. Stützstruktur nach Anspruch 8, **dadurch gekennzeichnet, daß** in der Triebebene (T) liegend weiterhin ein Antriebsrad (23) der Ausgleichswelle (20) und ein weiteres, als Antriebsrad für ein Nebenaggregat wirkendes Umlenkrad (42) der Hubkolben-Brennkraftmaschine angeordnet ist.

10. Stützstruktur nach Anspruch 9, **dadurch gekennzeichnet, daß** das Nebenaggregat neben der Ausgleichswelle (20) liegend lösbar am Bauteil (3) gehalten ist.

11. Stützstruktur nach Anspruch 10, **gekennzeichnet durch** einen parallel zur Ausgleichswelle (20) im Bauteil (3) verlaufenden, den Zuströmkanal (45) schneidenden und die Lager (8) und (9) miteinander verbindenden Versorgungskanal (47).

12. Stützstruktur nach Anspruch 1 und nach Anspruch 10, **dadurch gekennzeichnet, daß** auf der Fläche (7) diagonal verlaufende und sich kreuzende Versteifungsrippen (30) angeordnet sind und der Versorgungskanal (47) entlang einer Reihe von Kreuzungspunkten (31) dieser Versteifungsrippen (30) verläuft.

## Claims

1. Supporting structure for a reciprocating piston internal combustion engine, wherein the supporting structure comprises a component (3) which, in the opening region of a crankcase with respect to an oil sump held thereon, extends in the transverse direction (Q) and longitudinal direction (L) of the crankcase, a compensator shaft (20) rotates between this component (3) and the oil sump and is surrounded at least around part of its circumference by an arcuate projection of the component (3), the component (3), formed in a plate-like manner, substantially separates the opening region of the crankcase with respect to the oil sump, the component (3) is attached to the crankcase by means of releasable connections and the compensator shaft (20) is supported in bearings (8, 9) integrally formed with the component (3), **characterised in that** the component (3) is held exclusively on a flange of the crankcase surrounding the opening region, that the flange defines a flange plane (E) which is spaced from the crankshaft centre (2) in the direction towards the oil sump, that, protruding on its surface (7) facing the oil sump, the component (3) comprises bearing blocks (10, 11) receiving the bearings (8, 9), and that the component (3) comprises a channel system for lubrication oil, which comprises at least one inlet channel (45), supplied from the flange, in the region of a bearing block (11), which supplies the bearing (9) at that location.

2. Supporting structure according to claim 1, **characterised in that** the surface (5) of the component (3), facing the crank gear (4), is formed so as to follow, at least partially, the connecting rod violin-shaped contour of the crank gear (4).

3. Supporting structure according to any one of the preceding claims, **characterised in that** the component (3) is formed in a substantially rectangular manner following the opening region of the crankcase and at least one (10) of the bearing blocks (10, 11) is disposed lying on one (15) of the two ends faces (15, 16) of this component (3).

4. Supporting structure according to claim 1 or 3, **characterised in that** the bearings (8, 9) are formed of the same material as the component (3) and not divided therefrom.

5. Supporting structure according to claim 3, **characterised in that** a further bearing (9) is disposed between the two end faces (15, 16) and a compensating mass (21) of the compensator shaft (20) is disposed lying between this bearing (9) and the end face (16) lying opposite end face (15) receiving a bearing block (10).

6. Supporting structure according to claim 3, **characterised in that** a compensating mass (24) of the compensator shaft (20) is disposed lying in front of the end face (15) receiving one bearing (8).

7. Supporting structure according to claim 6, **characterised in that** one bearing block (10) is formed integrally in an end wall (17) lying against the end face (15), which end wall also receives a bearing (43) for a diverting wheel (42) of an endless drive driving the compensator shaft (20).

8. Supporting structure according to claim 7, **characterised in that** the diverting wheel (42) runs in a drive plane (T) which lies between the compensating mass (24) and the end wall (17).

9. Supporting structure according to claim 8, **characterised in that** a drive wheel (23) of the compensator shaft (20) and a further diverting wheel (42) - acting as a drive wheel for an additional assembly - of the reciprocating piston internal combustion engine are also disposed lying in the drive plane (T).

10. Supporting structure according to claim 9, **characterised in that** the additional assembly is held in a releasable manner on the component (3) and lying next to the compensator shaft (20).

11. Supporting structure according to claim 10, **characterised by** a supply channel (47) extending in parallel with the compensator shaft (20) in the component (3), bisecting the inlet channel (45) and connecting the bearings (8) and (9) to each other.

12. Supporting structure according to claim 1 and claim 10, **characterised in that** diagonally extending and mutually crossing reinforcing ribs (30) are disposed on the surface (7) and the supply channel (47) extends along a row of crossing points (31) of these reinforcing ribs (30).

## Revendications

1. Structure d'appui d'un moteur à combustion à piston à mouvement alternatif, la structure d'appui comprenant un composant (3) s'étendant, dans la zone d'ouverture d'un carter de vilebrequin en regard d'un carter d'huile qui y est fixé, dans la direction transversale (Q) et la direction longitudinale (L) du carter de vilebrequin, un arbre d'équilibrage (20), qui est au moins sur une partie de sa circonférence entouré d'un appendice en forme d'arc du composant (3), tournant entre ce composant (3) et le carter d'huile, le composant (3), constitué en forme de plaque, séparant la zone d'ouverture du carter de vilebrequin essentiellement vis-à-vis du carter d'huile, le composant (3) étant fixé au carter de vilebrequin au moyen d'assemblages détachables, et l'arbre d'équilibrage (20) étant supporté par des paliers (8, 9) constitués d'une façon intégrée avec le composant (3), **caractérisée en ce que** le composant (3) est retenu exclusivement à une bride du carter de vilebrequin entourant la zone d'ouverture, **en ce que** la bride définit un plan de bride (E) qui est situé dans la direction du carter d'huile à distance du milieu de vilebrequin (2), **en ce que** le composant (3) présente, sur sa surface (7) tournée vers le carter d'huile, des supports de palier (10, 11) en saillie logeant les paliers (8, 9), et ce que le composant (3) présente un système de conduites d'huile de lubrification avec au moins une conduite d'amenée (45), alimentée depuis la bride, dans la zone d'un support de palier (11), conduite qui alimente le palier (9) situé à cet endroit.

2. Structure d'appui selon la revendication 1, **caractérisée en ce que** la surface (5), tournée vers le mécanisme d'embiellage (4), du composant (3) est constituée en suivant au moins par tronçons le contour en violon de bielle du mécanisme d'embiellage (4).

3. Structure d'appui selon l'une des revendications précédentes, **caractérisée en ce que** le composant (3) est constitué sous forme essentiellement rectangulaire en suivant la zone d'ouverture du carter de vilebrequin et **en ce qu'**au moins un (10) des supports de palier (10, 11) est disposé sur un (15) des deux côtés frontaux (15, 16) de ce composant (3).

4. Structure d'appui selon la revendication 1 ou 3, **caractérisée en ce que** les paliers (8, 9) sont constitués de façon non divisée et dans le même matériau par rapport au composant (3).

5. Structure d'appui selon la revendication 3, **caractérisée en ce qu'**un autre palier (9) est disposé entre les deux côtés frontaux (15, 16) et une masse d'équilibrage (21) de l'arbre d'équilibrage (20) est disposée entre ce palier (9) et le côté frontal (16) opposé au côté frontal (15) logeant un support de palier (10).

6. Structure d'appui selon la revendication 3, **caractérisée en ce qu'**une masse d'équilibrage (24) de l'arbre d'équilibrage (20) est disposée devant le côté frontal (15) logeant le palier (8).

7. Structure d'appui selon la revendication 6, **caractérisée en ce qu'**un support de palier (10) est constitué de façon intégrée dans une paroi frontale (17) située sur le côté frontal (15) et qui loge également un support (43) pour une roue de renvoi (42) d'un entraînement sans fin entraînant l'arbre d'équilibrage (20).

8. Structure d'appui selon la revendication 7, **caractérisée en ce que** la roue de renvoi (42) se déplace dans un plan de travail (T) qui est situé entre la masse d'équilibrage (24) et la paroi frontale (17).

9. Structure d'appui selon la revendication 8, **caractérisée en ce que**, situées dans le plan de travail (T), sont disposées également une roue d'entraînement (23) de l'arbre d'équilibrage (20) et une autre roue de renvoi (42), agissant comme roue d'entraînement pour un organe auxiliaire, du moteur à combustion à piston à mouvement alternatif.

10. Structure d'appui selon la revendication 9, **caractérisée en ce que** l'organe auxiliaire est retenu de façon amovible sur le composant (3), près de l'arbre d'équilibrage (20).

11. Structure d'appui selon la revendication 10, **caractérisée par** une conduite d'alimentation (47) disposée parallèlement à l'arbre d'équilibrage (20) dans le composant (3), coupant la conduite d'amenée (45) et reliant entre eux les paliers (8) et (9).

12. Structure d'appui selon la revendication 1 et selon la revendication 10, **caractérisée en ce que**, sur la surface (7) sont disposées des nervures de renfort (30) placées en diagonale et entrecroisées, et la conduite d'alimentation (47) est disposée le long d'une rangée de points de croisement (31) de ces nervures de renfort (30).
